# EUROPÄISCHE PATENTSCHRIFT

(11) **EP 3 284 583 B1**
(45) Veröffentlichungstag und Bekanntmachung des Hinweises auf die Patenterteilung: **20.02.2019**
(21) Anmeldenummer: 16450019.1
(22) Anmeldetag: 18.08.2016
(51) Int. Cl.: B29C 67/00

(54) **VERFAHREN UND VORRICHTUNG ZUR LITHOGRAPHIEBASIERTEN GENERATIVEN FERTIGUNG VON DREIDIMENSIONALEN FORMKÖRPERN**
METHOD AND DEVICE FOR LITHOGRAPHY-BASED GENERATIVE PRODUCTION OF THREE-DIMENSIONAL MOULDS
PROCEDE ET DISPOSITIF DE FABRICATION GENERATIVE PAR LITHOGRAPHIE DE CORPS DE FORMAGE TRIDIMENSIONNELS

(43) Veröffentlichungstag der Anmeldung: 21.02.2018
(73) Patentinhaber: Cubicure GmbH, 1230 Wien (AT)
(72) Erfinder: Gmeiner, Robert, A-1040 Wien (AT)
(74) Vertreter: Keschmann, Marc

(56) Entgegenhaltungen:
- EP-A1- 2 052 693
- EP-A1- 2 875 934
- WO-A1-2016/012389

## Beschreibung

Die Erfindung betrifft ein Verfahren zur lithographiebasierten generativen Fertigung von dreidimensionalen Formkörpern, bei dem durch Einwirkung elektromagnetischer Strahlung verfestigbares Material auf einer zumindest bereichsweise durchlässigen Materialauflage vorliegt, eine Bauplattform in Abstand von der Materialauflage positioniert wird, zwischen der Bauplattform und der Materialauflage befindliches Material erwärmt wird und im erwärmten Zustand ortsselektiv von einer ersten Strahlungsquelle bestrahlt und verfestigt wird, wobei die elektromagnetische Strahlung von unten durch die für die Strahlung der ersten Strahlungsquelle zumindest bereichsweise durchlässige Materialauflage in das Material eingebracht wird.

Die Erfindung betrifft weiters eine Vorrichtung zur Durchführung eines solchen Verfahrens.

In der lithographischen oder stereolithographischen additiven Fertigung wird photopolymerisierbares Ausgangsmaterial schichtweise zu Formkörpern verarbeitet. Die Schichtinformation wird dabei orts- und zeitselektiv entweder durch eine optische Maske, eine projizierte Bildfläche oder durch Rastern mittels Laserstrahls auf das zu polymerisierende Material übertragen. Hierbei kommt es zu grundlegenden Unterscheidungen in der Wahl der Belichtungs- und Strukturierungsmethodik: Es kann einerseits ein (Tauch)Becken eines photopolymerisierbaren Materials von oben belichtet werden, wobei das strukturierte Objekt während der Herstellung sukzessive in das flüssige Material eintaucht (SLA), oder aber es wird ein Materialreservoir (gefüllte Materialwanne) von unten durch einen transparenten Wannenboden hindurch belichtet, wobei das Objekt von oben aus dem Materialbad entnommen wird (DLP, Laser-Stereolithographie). In letzterem Fall wird das Objekt Schicht für Schicht strukturiert, wobei der jeweilige Abstand zwischen Objekt und Materialwannenboden eine hochpräzise Schichtdicke garantiert. In neuartigen Verfahren kann diese Art der Strukturierung statt schichtweise auch kontinuierlich erfolgen, wobei dann noch weitere spezielle Anforderungen an den Wannenboden gestellt werden müssen.

Allen genannten Prozessmethoden gemein ist die hohe geometrische Qualität der additiv strukturierten Erzeugnisse. Für technische Anwendungen, aber auch im Bereich von End-User Produkten ist neben der geometrischen Qualität eines Objekts zusätzlich auch dessen Materialqualität entscheidend. Bei additiv verarbeiteten Kunststoffen äußern sich bekannte Defizite vor allem bei der Temperaturfestigkeit (starker Verlust der Steifigkeit/E-Modul bei Temperaturerhöhung - meist bereits ab 40-50°C) bzw. der Zähigkeit (Schlagzähigkeit/ Widerstand gegen fatalen Bruch oder Riss) bei Umgebungstemperatur.

Neuartige Photopolymersysteme für Stereolithographieprozesse, welche die Fertigung von Formkörpern mit verbesserter Materialqualität erlauben, weisen in der Regel eine hohe Viskosität auf und sind deshalb schwer zu verarbeiten. Die hohe Viskosität erschwert beispielsweise den Materialnachtransport erheblich. Es wird daher aktuell danach gestrebt, Materialien zu verwenden, deren dynamische Viskosität im Verarbeitungsstadium den Bereich von einigen Pa·s (Pascal-Sekunden) nicht übersteigt.

Um dennoch Materialien mit höherer Viskosität zu verarbeiten, ist bereits vorgeschlagen worden, die Prozessführung bei erhöhter Temperatur vorzunehmen. Bereits bei einer geringen Erhöhung der Prozesstemperatur gegenüber normaler Raumtemperatur (20°C) vermindert sich die Viskosität der allermeisten Photopolymere deutlich. Es wird dadurch eine erhebliche Vergrößerung der zur Auswahl stehenden Ausgangspolymersubstanzen erreicht, welche im Weiteren zu neuartigen 3D-Druckmaterialien führen können.

Die Art der Prozessbeheizung im Stereolithographie-Bereich stellt vor allem bei der Prozessführung der von unten belichteten Materialwanne eine Herausforderung dar, wenn eine gleichmäßige Erwärmung des Wanneninhalts erreicht werden soll. In der WO 2015/074088 A2 ist ein Verfahren offenbart, bei dem die Wärmezufuhr mit Hilfe einer intransparenten Widerstandsheizung am Rand der Belichtungszonen erfolgt. Nachteilig ist hierbei, dass große Temperaturgradienten innerhalb der Materialwanne entstehen, wodurch die Prozesskontrolle erheblich erschwert wird bzw. keine homogene Materialviskosität gewährleistet werden kann.

In der WO 2016/078838 A1 ist ein Verfahren offenbart, bei dem die Beheizung mit Hilfe einer transparenten, vollflächig elektrisch leitfähigen, sich im stromdurchflossen Zustand erwärmenden Beschichtung des Wannenbodens erfolgt. Damit gelingt zwar eine Homogenisierung der Erwärmung, jedoch sind mögliche Heizleistungsgrenzen rasch erreicht und Temperaturen über 60°C sind nur schwer im Dauerbetrieb aufrecht zu erhalten. Erschwerend kommt hinzu, dass bestimmte transparente elektrische Beschichtungen (Indium-Zinnoxid, ITO) Wellenlängen des sichtbaren Lichts unterhalb von 450nm zunehmend absorbieren und im Bereich des nahen UV-Lichts bereits vollständig intransparent werden. Gerade dieser nahe UV-Bereich ist allerdings Voraussetzung für eine effiziente stereolithographische Verarbeitung von Kunststoffen.

Insbesondere gilt dies, wenn ungefärbte transparente Kunststoffe verarbeitet werden sollen.

Eine weitere Möglichkeit der direkten oder indirekten Materialerwärmung ist durch Wärmestrahlung mit Infrarotstrahlen denkbar. Ein Vorteil der Beheizung mittels Wärmestrahlung ist die zumindest theoretisch mögliche, hohe Heizleistung welche an das Material abgegeben werden kann. Die natürliche Absorption von zumindest Teilen des infraroten Spektrums durch Kunststoffe und Photopolymere kann hier sowohl den eben genannten Vorteil, aber auch einen entscheidenden Nachteil darstellen: Eine hinreichende Kontrolle der Heizrate, sowie der finalen Temperatur des zu erwärmenden reaktiven Photopolymers ist dadurch schwierig bis unmöglich. Eindringende Infrarotstrahlung wird kontinuierlich durch das Photopolymer absorbiert und dadurch abgeschwächt. In einem Materialbad erwärmen sich dadurch die bestrahlte Oberfläche und direkt darunterliegende Bereiche stark, während tiefere Regionen kühler bleiben. Die schlechte Wärmeleitfähigkeit der flüssigen Ausgangsstoffe trägt hierbei entscheidend zu einer inhomogenen Temperaturverteilung bei. Im Falle der Beheizung einer dünnen Polymerschicht durch Infrarotstrahlung ist nun wiederum das Aufrechthalten der Prozesstemperatur ein Problem: Eine dünne Materialschicht kühlt durch ihre extrem große Oberfläche im Verhältnis zu ihrem Volumen schnell auf Umgebungstemperatur ab (Wärmeleitung an Umgebungsluft und Konvektion). Die dadurch notwendige ständige Infrarotbestrahlung dieser Oberfläche kann nun aber auch zu einer sehr schnellen lokalen Erhöhung der Schichttemperatur führen, wodurch auch eine temperaturinduzierte radikalische Polymerisation oder sonstige Schädigung des Materials erfolgen kann. Da die zu verarbeitenden Photopolymere durch den Temperaturanstieg auch wesentlich reaktiver werden und dadurch bereits im unbelichteten Zustand einzelne Reaktionsschritte ausführen, ist zumindest von einer Verschlechterung der Prozessqualität über die Zeit auszugehen.
Ebenfalls bekannt sind Varianten von Stereolithographie-Maschinen, welche den Strukturierungsprozess in einer Art Ofen durchführen, wodurch die gesamte Prozesszone beheizt werden kann. Obwohl diese Lösung technisch umsetzbar ist, erfordert sie eine aufwendige und kostenintensive Konstruktion der Stereolithographieanlage und bedingt einen hohen Energieverbrauch während des Prozesses.
Ziel der vorliegenden Erfindung ist es demnach, eine technische Lösung zu bieten, welche eine kontrollierte und homogene Erwärmung des zu verarbeitenden Photopolymers während des Prozesses garantieren kann und welche möglichst leicht in die bestehende Prozesstechnologie implementiert werden kann.
Zur Lösung dieser Aufgabe sieht die Erfindung bei einem Verfahren der eingangs genannten Art im Wesentlichen vor, dass die Erwärmung des Materials durch Bestrahlung der Materialauflage mit elektromagnetischer Strahlung einer zweiten Strahlungsquelle erfolgt, wobei die Materialauflage für die Strahlung der zweiten Strahlungsquelle im Wesentlichen undurchlässig ist.
Die Erfindung sieht somit vor, dass zwei gesonderte Strahlungsquellen zum Einsatz kommen, wobei die erste Strahlungsquelle für die Polymerisation bzw. Verfestigung des die Materialauflage benetzenden, verfestigbaren Materials sorgt und die zweite Strahlungsquelle der Erwärmung der Materialauflage im Sinne einer Strahlungsheizung dient. Die Materialauflage ist zu diesem Zweck derart ausgebildet, dass sie für die Strahlung der ersten Strahlungsquelle transparent ist, damit die Strahlung in das zu verfestigenden Material gelangt, und dass sie für die Strahlung der zweiten Strahlungsquelle im Wesentlichen undurchlässig ist. Die Strahlung der zweiten Strahlungsquelle wird somit in der Materialauflage absorbiert und sorgt dort für eine Erwärmung der Materialauflage, wobei das zu verfestigende Material indirekt, nämlich durch Wärmeübertragung durch Wärmeleitung von der Materialauflage auf das zu verfestigende Material erwärmt wird.

Die selektive Durchlässigkeit der Materialauflage wird bevorzugt dadurch erreicht, dass die Strahlung der ersten Strahlungsquelle einen ersten Wellenlängenbereich und die Strahlung der zweiten Strahlungsquelle einen zweiten, vom ersten Wellenlängenbereich verschiedenen, insbesondere nicht überlappenden, Wellenlängenbereich umfasst.

Insbesondere liegt die Strahlung der ersten Strahlungsquelle im Wellenlängenbereich von 200-900nm, insbesondere 300-400nm oder 400-480nm, und die Strahlung der zweiten Strahlungsquelle liegt im infraroten Spektrum, insbesondere im Wellenlängenbereich von 900-15.000nm.

Die Materialauflage ist dabei so konzipiert, dass sie für die Strahlung der ersten Strahlungsquelle, insbesondere im Bereich unter 500nm (blaues, violettes Spektrum) bzw. für Strahlung des nahen bis mittleren UV-Bereichs im Bereich 300nm-400nm, transparent oder teiltransparent ist. Dies ermöglicht eine orts- und zeitselektive Strukturierung des photosensitiven Materials durch die Materialauflage hindurch und ermöglicht dadurch den additiven Herstellungsprozess. Die selektive Belichtung kann dabei mittels digital light processing (DLP, Flächenbelichtung eines Schichtbildes), Laser (Abrastern des Bildes) oder anderer aktiver oder passiver optischer Masken stattfinden.

Die kontrollierte gleichmäßige Erwärmung des verfestigbaren Materials soll darüber hinaus hauptsächlich durch Wärmeleitung von der Materialauflage auf das Material selbst stattfinden, wodurch ein eng temperiertes Prozessfenster auch über längere Zeit hinweg aufrechterhalten werden kann. Hierbei wird bevorzugt eine Infrarotstrahlungsquelle benutzt, um die Materialauflage zu erwärmen. Die Materialauflage muss dann im Spektrum der eintreffenden Infrarotstrahlung weitestgehend intransparent sein (>900nm) oder zumindest einen Bereich des Infrarotspektrums zwischen 900nm und 15000nm absorbieren, um eine signifikante Erwärmung zu erfahren. Um die im Stand der Technik beschriebenen Probleme der Temperaturkontrolle des photosensitiven Materials zu umgehen, sollte die eingesetzte Materialauflage bevorzugt möglichst alle Bereiche des zur Erwärmung eingesetzten Infrarotspektrums absorbieren bzw. herausfiltern, wodurch möglichst wenig oder gar keine Infrarotstrahlung passieren und somit das photosensitive Material selbst erreichen kann.

Dadurch, dass die Materialauflage erfindungsgemäß berührungslos und durch strahlungsinduzierte Energieübertragung erwärmt wird, wird vermieden, dass das photosensitive (und zu Teilen auch stets temperaturlabile) Ausgangsmaterial direkt mit Infrarotstrahlung bestrahlt wird. Dies hat den Vorteil, dass (im Gegensatz zu elektrisch leitenden transparenten Folien - z.B. ITO Beschichtung) hohe Heizleistungen erreicht werden können. Im Weiteren kann durch die indirekte Bestrahlung eine frühzeitige thermisch indizierte und unkontrollierte Polymerisation des photosensitiven Materials in Folge eigener Infrarotabsorption (und dadurch entstehender unkontrollierter zusätzlicher Erwärmung) ausgeschlossen werden. Da der Wärmeübergang zwischen der Materialauflage und dem photosensitiven Ausgangsmaterial möglichst nur über reine Wärmeleitung erfolgt, kann die Maximaltemperatur des photosensitiven Ausgangsmaterials sehr genau über die Temperatur der Materialauflage geregelt werden. Dies funktioniert umso besser, je dünner die dem Prozess zugeführten Schichten des Ausgangsmaterials sind. Darüber hinaus führt der Verzicht von intransparenten Widerstandsheizelementen (welche nur außerhalb der eigentlichen Belichtungszone eingesetzt werden können) vor allem auch dazu, dass eine homogene Prozesstemperatur über das gesamte Baufeld bzw. die gesamte Materialauflage hinweg eingestellt und gehalten werden kann.

Eine bevorzuge Ausbildung sieht vor, dass die Strahlung der zweiten Strahlungsquelle der Materialauflage aus der Richtung der ersten Strahlung zugeführt wird, sodass die Materialauflage von unten erwärmt wird.

Um eine gleichmäßige Erwärmung der Materialauflage über eine möglichst große Fläche zu erreichen, soll ein möglichst großer Flächenbereich der Materialauflage mit Hilfe der zweiten Strahlungsquelle bestrahlt werden, nämlich insbesondere mindestens jener Bereich der Materialauflage, den das zu verfestigende Material benetzt. Eine weitere bevorzugte Verfahrensweise sieht in diesem Zusammenhang vor, dass die Strahlung der zweiten Strahlungsquelle auf den für die Strahlung der ersten Strahlung transparenten Bereich der Materialauflage gerichtet wird.

Die Materialauflage kann beispielsweise aus einem infrarotabsorbierenden Glas oder Glaslaminat bestehen, welches die oben genannten Anforderungen erfüllt und gegebenenfalls an Ober- und/oder Unterseite mit speziellen Beschichtungen versehen ist. Diese Beschichtungen können beispielsweise dem Zweck einer verstärkten Infrarotreflexion dienen.

In bevorzugter Weise kann eine Beschichtung der Materialauflage vorgesehen sein, die den Stereolithogaphieprozess an sich unterstützt. Beispielsweise kann eine die Schichtabtrennung durch Reduzierung der Oberflächenhaftung erleichternde Beschichtung, wie z.B. eine PTFE-Beschichtung vorgesehen sein. Reduzierte Abzugskräfte können darüber hinaus auch durch eine Silikonbeschichtung erreicht werden.

Gemäß einer bevorzugten Ausführung ist die Strahlungsquelle der zweiten Strahlung als Infrarotstrahlungsquelle mit einer Emitter-Glühtemperatur zwischen 100°C und 5.000°C, vorzugsweise zwischen 500°C und 3.000°C, ausgebildet.

Bevorzugt erfolgt die Bestrahlung der Materialauflage mit der elektromagnetischen Strahlung der zweiten Strahlungsquelle zur Erwärmung der Materialauflage auf eine Temperatur von 40°C-300°C, vorzugsweise 40°C-150°C. Dadurch kann das verfestigbare Material in einfacher Weise gleichmäßig auf eine Temperatur von mindestens 40°C erwärmt werden.

Das erfindungsgemäße Verfahren kommt besonders bei verfestigbaren Materialien zum Tragen, die bei Raumtemperatur (20°C) eine Viskosität von mindestens 15 Pa·s, vorzugsweise mindestens 20 Pa·s aufweisen. Durch die erfindungsgemäß erreichte Erwärmung des verfestigbaren Materials wird die Viskosität deutlich abgesenkt, insbesondere auf eine dynamische Viskosität von < 5 Pa·s.

Mit einer hohen Viskosität des Ausgangsmaterials ist man insbesondere bei der Verarbeitung von gefüllten verfestigbaren Materialien (Schlicker) konfrontiert. Hierbei wird ein sinterfähiges Material (z.B. Keramik oder Metall) in Pulverform einem zähflüssigen, lichtempfindlichen Kunstharz beigemengt. Beim Aushärten wirkt das ausgehärtete Polymer als Binder. Nachdem der Aufbau des Formkörpers beendet ist, kann das ausgehärtete Polymer thermisch entfernt und danach das übergebliebene Füllmaterial (z.B. Keramikpulver) zu einer festen Struktur zusammengesintert werden. Dieses Verfahren erlaubt es, alle Vorteile der generativen Fertigung auch für Materialien zu nützen, die grundsätzlich nicht für diese Verfahren geeignet wären. Der Füllgrad, d.h. der Anteil an Pulver im Schlicker, ist hierbei einer der wichtigsten Faktoren bezüglich Verarbeitbarkeit und Materialqualität.

Allgemein kommen als verfestigbares Material reine Polymere oder Polymergemische, sowie gefüllte Polymere (Komposite)in Frage. Gefüllte Polymere (Grünkörper), welche als Ausgangsobjekte zur Fertigung von keramischen oder metallischen Erzeugungen dienen, sind dabei ebenfalls erfasst. Vorzugsweise kommt ein ungefülltes oder mit Füllmaterial, insbesondere Keramik- oder Metallpulver, gefülltes photopolymerisierbares Material zum Einsatz.

Die Größe des Wärmestroms an das verfestigbare Material hängt vom Temperaturunterschied zwischen der Materialauflage und dem verfestigbaren Material sowie von den Wärmeleitungskennzahlen der eingesetzten Materialien ab. Hierbei sind die spezifische Wärmekapazität und Wärmeleitfähigkeit, bzw. der jeweilige Wärmeübergangskoeffizient der Materialauflage sowie des verfestigbaren Materials zu nennen, sowie die zum Wärmeaustausch zur Verfügung stehende Gesamtfläche zu berücksichtigen. Bei der Beheizung von dünnen Schichten des verfestigbaren Materials ist zudem von einer raschen weitest gehenden Angleichung an die Temperatur der Materialauflage auszugehen. Die Prozesskontrolle kann demzufolge entweder durch Berechnung und genaue Kenntnis der Wärmeströme innerhalb des betrachteten Systems oder einfacher durch Temperaturmessung der Materialauflage erfolgen. Die benötigte Strahlungsenergie der zweiten Strahlungsquelle wird durch ein Regelsystem gesteuert, welches beispielsweise die Temperatur des Materialwannenbodens als Stellgröße benutzt. Die Temperaturmessung selbst kann entweder mittels Temperatursensoren in ausgewählten Bereichen der Materialauflage oder mittels kontaktloser Infrarotmessung erfolgen. Ebenso kann die Schichttemperatur des verfestigbaren Materials selbst gemessen werden und als Stellgröße dienen. Der stereolithographische additive Strukturierungsprozess kann demzufolge beliebig lang bei genau definierter Materialtemperatur geführt werden.

Eine bevorzugte Ausführung des erfindungsgemäßen Verfahrens sieht in diesem Zusammenhang vor, dass die Temperatur der Materialauflage und/oder des verfestigbaren Materials gemessen wird und die Strahlungsleistung der zweiten Strahlungsquelle in Abhängigkeit von den Temperaturmesswerten geregelt wird.

Wie bereits erwähnt, wird der Bauprozess in bevorzugter Weise schichtweise vorgenommen. Das Verfahren kann hierbei so durchgeführt werden, dass nacheinander Formkörperschichten übereinander ausgebildet werden, indem jeweils auf der Materialauflage eine Materialschicht vorgegebener Dicke ausgebildet wird und eine Bauplattform oder der an der Bauplattform zumindest teilweise aufgebaute Formkörper in die Materialschicht abgesenkt wird, sodass sich zwischen der Bauplattform bzw. dem Formkörper und der Materialauflage eine zu verfestigende Schicht des Materials ausbildet, die durch Bestrahlung zur Ausbildung der gewünschten Form der Formkörperschicht verfestigt wird.

Die Materialauflage ist bevorzugt als Boden einer das verfestigbare Material aufnehmenden Wanne ausgebildet. Alternativ kann die Materialauflage auch als Folie ausgeführt sein.

Die beschriebene Materialauflage kann zudem auch beweglich ausgeführt sein, falls dies den Schichtauftrag des verfestigbaren Materials unterstützt.

Gemäß einem weiteren Aspekt der Erfindung ist eine Vorrichtung zur lithographiebasierten generativen Fertigung von dreidimensionalen Formkörpern vorgesehen, umfassend eine erste Strahlungsquelle elektromagnetischer Strahlung, eine zumindest bereichsweise für die Strahlung der ersten Strahlungsquelle durchlässige Materialauflage für ein durch Einwirkung der Strahlung verfestigbares Material, eine Bauplattform, die in einstellbarer Höhe über der Materialauflage gehalten ist, eine die erste Strahlungsquelle umfassende erste Bestrahlungseinheit, die zur ortsselektiven Bestrahlung von zwischen der Bauplattform und der Materialauflage befindlichen Materials von unten durch die Materialauflage ansteuerbar ist, und eine Heizeinrichtung zum Erwärmen des zwischen der Bauplattform und der Materialauflage befindlichen Materials, dadurch gekennzeichnet, dass die Heizeinrichtung eine auf die Materialauflage gerichtete zweite Bestrahlungseinheit mit einer zweiten Strahlungsquelle elektromagnetischer Strahlung umfasst und dass die Materialauflage für die Strahlung der zweiten Strahlungsquelle im Wesentlichen undurchlässig, ist.

Eine bevorzugte Ausbildung der Vorrichtung sieht vor, dass die Strahlung der ersten Strahlungsquelle einen ersten Wellenlängenbereich und die Strahlung der zweiten Strahlungsquelle einen zweiten, vom ersten Wellenlängenbereich verschiedenen, insbesondere nicht überlappenden, Wellenlängenbereich umfasst.

Die Strahlung der ersten Strahlungsquelle liegt beispielswiese im Wellenlängenbereich von 200-900nm, insbesondere 300-400nm oder 400-480nm, und die Strahlung der zweiten Strahlungsquelle liegt beispielsweise im infraroten Spektrum, insbesondere im Wellenlängenbereich von 900-15.000nm.

Eine weitere bevorzugte Ausbildung der Vorrichtung sieht vor, dass die zweite Bestrahlungseinheit derart angeordnet ist, dass die Strahlung der zweiten Strahlungsquelle der Materialauflage aus der Richtung der ersten Strahlung zugeführt ist.

Eine bevorzugte Ausbildung der Vorrichtung sieht vor, dass die Strahlung der zweiten Strahlungsquelle auf den für die Strahlung der ersten Strahlung transparenten Bereich der Materialauflage gerichtet ist.

Eine bevorzugte Ausbildung der Vorrichtung sieht vor, dass die Materialauflage auf der vom verfestigbaren Material benetzten Seite und/oder auf der dem verfestigbaren Material abgewandten Seite eine die Strahlung der zweiten Strahlungsquelle zumindest teilweise absorbierende Schicht trägt.

Eine bevorzugte Ausbildung der Vorrichtung sieht vor, dass ein Temperatursensor zur Messung der Temperatur der Materialauflage und/oder des verfestigbaren Material vorgesehen ist, der mit einer Steuereinheit zur Regelung der Heizleistung der zweiten Bestrahlungseinheit derart zusammenwirkt, dass eine vorgegebene Temperatur der Materialauflage oder des verfestigbaren Materials erreicht und/oder gehalten werden kann.

Ein schichtweiser Aufbau des Formkörpers wird bevorzugt dadurch erreicht, dass eine mit der ersten Bestrahlungseinheit zusammenwirkende Steuereinheit dazu vorbereitet ist, in aufeinanderfolgenden Bestrahlungsschritten übereinanderliegende Schichten auf der Bauplattform jeweils mit vorgegebener Geometrie durch Steuerung der ersten Bestrahlungseinheit zu verfestigen und nach jedem Bestrahlungsschritt für eine Schicht die Relativposition der Bauplattform zum Wannenboden anzupassen, um so sukzessive den Formkörper in der gewünschten Form aufzubauen.

Bevorzugt sind eine bewegbar geführte Rakel und eine Antriebseinheit zum Hin- und Herbewegen der Rakel unter der Bauplattform hindurch vorgesehen, um zwischen zwei Bestrahlungsschritten jeweils eine Schicht vorgegebener Dicke des verfestigbaren Materials auszubilden, oder aber es ist die gesamte Materialauflage bewegbar gegenüber einer stehenden Rakel-/Beschichtungseinheit ausgeführt.

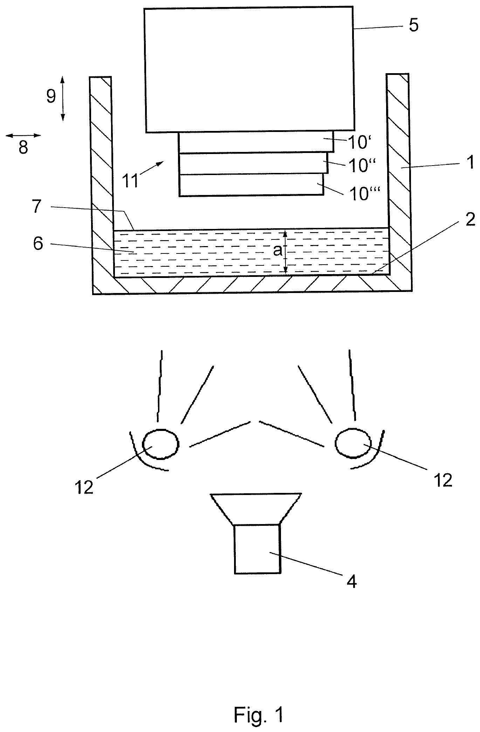

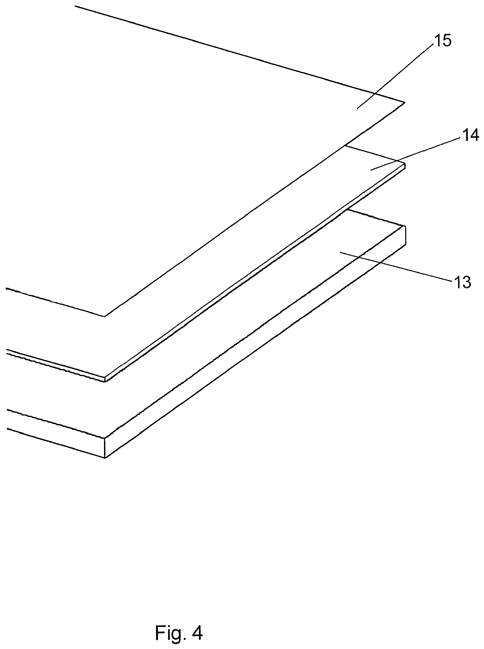

Die Erfindung wird nachfolgend anhand von in der Zeichnung schematisch dargestellten Ausführungsbeispielen näher erläutert. In dieser zeigen Fig. 1 bis 3 schematische seitliche Schnittansichten einer erfindungsgemäßen Vorrichtung in aufeinanderfolgenden Phasen des Verfahrensablaufs und Fig. 4 den Schichtaufbau des Wannenbodens.

Die Funktionsweise einer Vorrichtung zur Ausführung eines Verfahrens der vorliegenden Erfindung wird zunächst unter Bezugnahme auf die Fig. 1 bis 3 beschrieben, welche mit Ausnahme der Beheizung des verfestigbaren Materials eine für sich gesehen bereits aus der EP 2505341 A1 bekannte Vorrichtung zeigen. Die in Luft oder einer anderen Gasatmosphäre befindliche Vorrichtung weist eine Wanne 1 auf, deren Wannenboden 2 eine Materialauflage bildet und zumindest in einem Teilbereich 3 durchsichtig oder durchscheinend ist. Dieser Teilbereich 3 des Wannenbodens erfasst zumindest die Ausdehnung einer ersten Bestrahlungs- bzw. Belichtungseinheit 4, die unter dem Wannenboden 2 angeordnet ist. Die Belichtungseinheit 4 weist eine nicht näher dargestellte erste Lichtquelle und einen Lichtmodulator auf, mit dem die Intensität von einer Steuereinheit gesteuert und ortsselektiv eingestellt werden kann, um ein Belichtungsfeld mit der für die momentan zu bildende Schicht gewünschten Geometrie an dem Wannenboden 2 zu erzeugen. Alternativ kann in der ersten Belichtungseinheit auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der ersten Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. Die Bauplattform 5 kann ebenfalls durchsichtig oder durchscheinend sein.

In der Wanne 1 befindet sich ein Bad aus durch Strahlungseinwirkung verfestigbarem, insbesondere photopolymerisierbarem Material 6. Der Materialspiegel 7 des Bades wird durch ein geeignetes Element definiert, wie z.B. eine Rakel, welche das Material in einer bestimmten Materialschichtdicke a gleichmäßig auf den Wannenboden 2 aufträgt. Der Wanne 1 kann beispielsweise eine Führungsschiene zugeordnet sein, auf der ein Schlitten in Richtung des Doppelpfeils 8 verschieblich geführt ist. Ein Antrieb sorgt für die Hin- und Herbewegung des Schlittens, der eine Halterung für eine Rakel aufweist. Die Halterung weist beispielsweise eine Führung und eine Verstelleinrichtung auf, um die Rakel in Richtung des Doppelpfeils 9 in Höhenrichtung zu verstellen. Damit kann der Abstand der Unterkante der Rakel vom Boden 2 der Wanne 1 eingestellt werden. Die Rakel kommt zum Einsatz, wenn sich die Bauplattform wie in Fig. 1 dargestellt im angehobenen Zustand befindet, und dient dazu, das Material 6 gleichmäßig unter Einstellung einer vorgegebenen Schichtdicke zu verteilen. Die sich beim Materialverteilungsvorgang ergebende Schichtdicke des Materials 6 ist durch den Abstand der Unterkante der Rakel vom Boden 2 der Wanne 1, sowie durch die Überfahrtgeschwindigkeit der Rakel definiert.

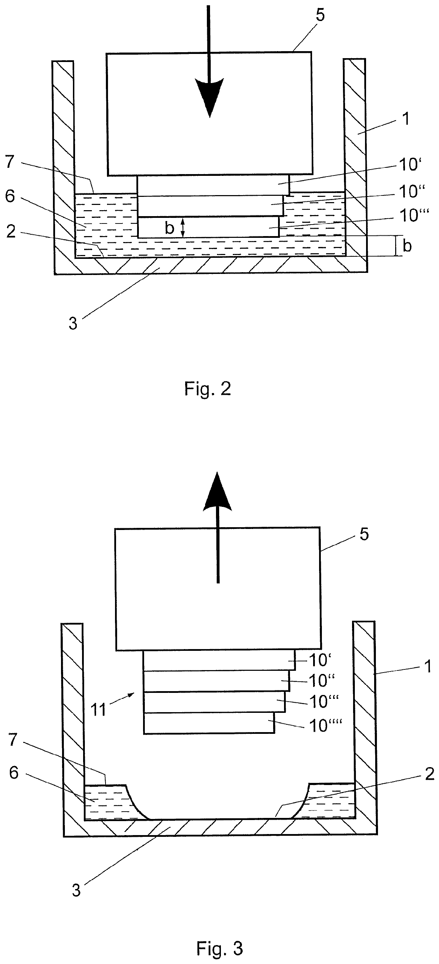

Die so entstandene Materialschichtdicke a ist dabei größer als die Formkörperschichtdicke b (Fig. 2). Zur Definition einer Schicht aus photopolymerisierbarem Material wird in folgender Weise vorgegangen. Die Bauplattform 5, an der bereits Formkörperschichten 10', 10" und 10"', die den Formkörper 11 bilden, ausgebildet wurden, wird, wie in Fig. 2 dargestellt, durch den Hubmechanismus in gesteuerter Weise abgesenkt, sodass die Unterseite der untersten Formkörperschicht 10"' die Oberfläche des Materialbads 6 mit Höhe a zunächst berührt, dann eintaucht und sich dem Wannenboden 2 soweit nähert, dass zwischen der Unterseite der untersten Formkörperschicht 10"' und dem Wannenboden 2 genau die gewünschte Formkörperschichtdicke b verbleibt. Während dieses Eintauchvorgangs wird photopolymerisierbares Material aus dem Zwischenraum zwischen der Unterseite der Bauplattform 5 und dem Wannenboden 2 verdrängt. Sobald sich die Formkörperschichtdicke b eingestellt hat, erfolgt die für diese Formkörperschicht spezifische ortsselektive Belichtung, um die Formkörperschicht 10"" in der gewünschten Form zu verfestigen. Nach der Bildung der Formkörperschicht 10"" wird die Bauplattform 5 mittels des Hubmechanismus wieder angehoben, was den in Fig. 3 gezeigten Zustand herbeiführt. Das photopolymerisierbare Material 6 ist im belichteten Bereich nicht mehr vorhanden.

Diese Schritte werden nachfolgend mehrfach wiederholt, um weitere Formkörperschichten 10 aus photopolymerisierbarem Material zu erhalten. Der Abstand der Unterseite der zuletzt gebildeten Formkörperschicht 10 zum Wannenboden 2 wird auf die gewünschte Formkörperschichtdicke b eingestellt und daraufhin das photopolymerisierbare Material in der gewünschten Weise ortsselektiv ausgehärtet.

Nach Anheben der Bauplattform 5 nach einem Belichtungsschritt liegt im belichteten Bereich ein Materialdefizit vor, wie in Fig. 3 angedeutet. Dies ist dadurch bedingt, dass nach Verfestigung der eingestellten Schicht mit der Dicke a das Material aus dieser Schicht verfestigt und mit der Bauplattform 5 und dem daran bereits gebildeten Teil des Formkörpers angehoben wird. Das damit fehlende photopolymerisierbare Material zwischen der Unterseite des bereits gebildeten Formkörperteils und dem Wannenboden 2 muss aus der Füllung des photopolymerisierbaren Materials 6 aus dem Umgebungsbereich des belichteten Bereichs aufgefüllt werden. Aufgrund der hohen Viskosität des Materials fließt dieses jedoch nicht von selbst wieder in den belichteten Bereich zwischen der Unterseite des Formkörperteils und dem Wannenboden zurück, so dass hier Materialsenken oder "Löcher" zurückbleiben können. Das Nachführen von Material in die Materialsenke erfolgt durch die von der oben beschriebenen Rakel bewirkte Materialverteilung.

Um das Nachführen von photopolymerisierbarem Material 6 in die Materialsenken zu erleichtern, ist erfindungsgemäß eine Erwärmung des Materials 6 vorgesehen, zu welchem Zweck eine, bevorzugt zwei, zweite Strahlungsquelle(n) 12 (siehe Fig. 1) unterhalb der Wanne 1 angeordnet ist bzw. sind, deren Strahlung auf den Wannenboden 2 gerichtet ist.

Die wenigstens eine zweite Strahlungsquelle 12 kann neben oder oberhalb der ersten Belichtungseinheit 4 angeordnet sein. Die Strahlung, insbesondere Infrarotstrahlung der zweiten Strahlungsquelle 12 bewirkt nun eine gleichmäßige Erwärmung des Wannenbodens 2, wobei sie zu größten Teilen durch diesen absorbiert wird. Das photosensitive Material 6 selbst wird nur teilweise oder gar nicht von Resten der durch den Wannenboden 2 passierenden Infrarotstrahlung erwärmt. Diese ggf. passierenden "Strahlungsreste" können sowohl in Form von einzelnen IR-Spektralbereichen oder aber in Form eines stark abgeschwächten Gesamtspektrums auftreten, führen aber im Idealfall selbst nicht mehr zu einer signifikanten Erwärmung des photosensitiven Materials 6. Die relevante Erwärmung des photosensitiven Materials 6 erfolgt daher direkt über Wärmeleitung zwischen dem Wannenboden 2 und dem photosensitiven Material 6 selbst, wobei natürlich der höhertemperierte Wannenboden 2 Wärme an das photosensitive Material 6 abgibt.

In Fig. 4 ist ein Beispiel eines möglichen Schichtaufbaus des Wannenbodens 2 dargestellt. Die Basis der Wannenbodens 2 bildet eine teiltransparente Platte 13, welche für Strahlung der zweiten Strahlungsquelle, insbesondere Strahlung des infraroten Spektrums weitgehend intransparent und für Strahlung des zur Strukturierung des photosensitiveh Materials verwendeten Lichts weitgehend transparent ausgeführt ist. Als geeignete Materialien dieser teiltransparenten Platte sind beispielsweise spezielle optische Gläser (Wärmeschutzgläser, Kurzpassfilter, etc.) zu nennen.

Über dieser Platte 13 kann nun eine Silikonschicht 14 definierter Dicke aufgebracht sein, um die während des additiven Bauprozesses auftretenden Ablösekräfte, bei Trennung der ausgehärteten Schichten 10 vom Wannenboden 2 zu reduzieren. Ebenfalls kann auf dieser Silikonschicht 14 auch eine FEP- oder PTFE-Beschichtung 15 oder eine Folie 15 aufgebracht sein, um die genannten Ablösekräfte weiter zu reduzieren. Zusätzlich können noch weitere Folien in ein solches Laminat eingebracht sein, um beispielsweise zusätzliche optische Filtereigenschaften hervorzurufen, oder bestehende Filtereffekte zu verstärken.

## Patentansprüche

1. Verfahren zur lithographiebasierten generativen Fertigung von dreidimensionalen Formkörpern (11), bei dem durch Einwirkung elektromagnetischer Strahlung verfestigbares Material (6) auf einer zumindest bereichsweise durchlässigen Materialauflage vorliegt, eine Bauplattform (5) in Abstand von der Materialauflage positioniert wird, zwischen der Bauplattform (5) und der Materialauflage befindliches Material (6) erwärmt wird und im erwärmten Zustand ortsselektiv von einer ersten Strahlungsquelle (4) bestrahlt und verfestigt wird, wobei die elektromagnetische Strahlung von unten durch die für die Strahlung der ersten Strahlungsquelle (4) zumindest bereichsweise durchlässige Materialauflage in das Material (6) eingebracht wird, **dadurch gekennzeichnet, dass** die Erwärmung des Materials (6) durch Bestrahlung der Materialauflage mit elektromagnetischer Strahlung einer zweiten Strahlungsquelle (12) erfolgt, wobei die Materialauflage für die Strahlung der zweiten Strahlungsquelle (12) im Wesentlichen undurchlässig ist.

2. Verfahren nach Anspruch 1, **dadurch gekennzeichnet, dass** die Strahlung der ersten Strahlungsquelle (4) einen ersten Wellenlängenbereich und die Strahlung der zweiten Strahlungsquelle (12) einen zweiten, vom ersten Wellenlängenbereich verschiedenen, insbesondere nicht überlappenden, Wellenlängenbereich umfasst, wobei die Strahlung der ersten Strahlungsquelle (4) vorzugsweise im Wellenlängenbereich von 200-900nm, insbesondere 300-400nm oder 400-480nm, liegt und die Strahlung der zweiten Strahlungsquelle (12) vorzugsweise im infraroten Spektrum, insbesondere im Wellenlängenbereich von 900-15.000nm liegt.

3. Verfahren nach einem der Ansprüche 1 oder 2, **dadurch gekennzeichnet, dass** die Strahlung der zweiten Strahlungsquelle (12) der Materialauflage aus der Richtung der ersten Strahlung zugeführt wird.

4. Verfahren nach einem der Ansprüche 1 bis 3, **dadurch gekennzeichnet, dass** die Strahlung der zweiten Strahlungsquelle (12) auf den für die Strahlung der ersten Strahlung transparenten Bereich der Materialauflage gerichtet wird.

5. Verfahren nach einem der Ansprüche 1 bis 4, **dadurch gekennzeichnet, dass** die Materialauflage auf der vom Material (6) benetzten Seite und/oder auf der dem Material (6) abgewandten Seite eine die Strahlung der zweiten Strahlungsquelle (12) zumindest teilweise absorbierende oder reflektierende Schicht trägt, oder aber die Materialauflage selbst aus einem Material mit einer solchen Absorptionseigenschaft besteht.

6. Verfahren nach einem der Ansprüche 1 bis 5, **dadurch gekennzeichnet, dass** die Bestrahlung der Materialauflage mit der elektromagnetischen Strahlung der zweiten Strahlungsquelle (12) zur Erwärmung der Materialauflage auf eine Temperatur von 40°C-300°C, vorzugsweise 40°C-150°C erfolgt.

7. Verfahren nach einem der Ansprüche 1 bis 6, **dadurch gekennzeichnet, dass** das verfestigbare Material (6) bei 20° Raumtemperatur eine Viskosität von mindestens 15 Pa·s aufweist.

8. Verfahren nach einem der Ansprüche 1 bis 7, **dadurch gekennzeichnet, dass** das verfestigbare Material (6) auf eine Temperatur von mindestens 40°C erwärmt wird.

9. Verfahren nach einem der Ansprüche 1 bis 8, **dadurch gekennzeichnet, dass** die Temperatur der Materialauflage und/oder des verfestigbaren Materials (6) gemessen wird und die Strahlungsleistung der zweiten Strahlungsquelle (12) in Abhängigkeit von den Temperaturmesswerten geregelt wird.

10. Verfahren nach einem der Ansprüche 1 bis 9, **dadurch gekennzeichnet, dass** der Formkörper (11) schichtweise aufgebaut wird, wobei nacheinander Formkörperschichten (10) übereinander ausgebildet werden, indem jeweils auf der Materialauflage eine Materialschicht vorgegebener Dicke ausgebildet wird und eine Bauplattform (5) oder der an der Bauplattform (5) zumindest teilweise aufgebaute Formkörper (11) in die Materialschicht abgesenkt wird, sodass sich zwischen der Bauplattform (5) bzw. dem Formkörper (11) und der Materialauflage eine zu verfestigende Schicht des Materials ausbildet, die durch Bestrahlung zur Ausbildung der gewünschten Form der Formkörperschicht (10) verfestigt wird.

11. Vorrichtung zur lithographiebasierten generativen Fertigung von dreidimensionalen Formkörpern (11), insbesondere zur Durchführung eines Verfahrens nach einem der Ansprüche 1 bis 10, umfassend eine erste Strahlungsquelle (4) elektromagnetischer Strahlung, eine zumindest bereichsweise für die Strahlung der ersten Strahlungsquelle (4) durchlässige Materialauflage für ein durch Einwirkung der Strahlung verfestigbares Material (6), eine Bauplattform (5), die in einstellbarer Höhe über der Materialauflage gehalten ist, eine die erste Strahlungsquelle (4) umfassende erste Bestrahlungseinheit, die zur ortsselektiven Bestrahlung von zwischen der Bauplattform (5) und der Materialauflage befindlichen Materials (6) von unten durch die Materialauflage ansteuerbar ist, und eine Heizeinrichtung zum Erwärmen des zwischen der Bauplattform (5) und der Materialauflage befindlichen Materials (6), **dadurch gekennzeichnet, dass** die Heizeinrichtung eine auf die Materialauflage gerichtete zweite Bestrahlungseinheit mit einer zweiten Strahlungsquelle (12) elektromagnetischer Strahlung umfasst und dass die Materialauflage für die Strahlung der zweiten Strahlungsquelle (12) im Wesentlichen undurchlässig ist.

12. Vorrichtung nach Anspruch 11, **dadurch gekennzeichnet, dass** die Strahlung der ersten Strahlungsquelle (4) einen ersten Wellenlängenbereich und die Strahlung der zweiten Strahlungsquelle (12) einen zweiten, vom ersten Wellenlängenbereich verschiedenen, insbesondere nicht überlappenden, Wellenlängenbereich umfasst, wobei die Strahlung der ersten Strahlungsquelle (4) vorzugsweise im Wellenlängenbereich von 200-900nm, insbesondere 300-400nm oder 400-480nm, liegt und die Strahlung der zweiten Strahlungsquelle (12) vorzugsweise im infraroten Spektrum, insbesondere im Wellenlängenbereich von 900-15.000nm liegt.

13. Vorrichtung nach Anspruch 11 oder 12, **dadurch gekennzeichnet, dass** die zweite Bestrahlungseinheit derart angeordnet ist, dass die Strahlung der zweiten Strahlungsquelle (12) der Materialauflage aus der Richtung der ersten Strahlung zugeführt ist.

14. Vorrichtung nach einem der Ansprüche 11 bis 13, **dadurch gekennzeichnet, dass** die Strahlung der zweiten Strahlungsquelle (12) auf den für die Strahlung der ersten Strahlung transparenten Bereich der Materialauflage gerichtet ist.

15. Vorrichtung nach einem der Ansprüche 11 bis 14, **dadurch gekennzeichnet, dass** die Materialauflage auf der vom verfestigbaren Material (6) benetzten Seite und/oder auf der dem verfestigbaren Material (6) abgewandten Seite eine die Strahlung der zweiten Strahlungsquelle (12) zumindest teilweise absorbierende oder reflektierende Schicht trägt, oder aber die Materialauflage selbst aus einem Material mit einer solchen Absorptionseigenschaft besteht.

16. Vorrichtung nach einem der Ansprüche 11 bis 15, **dadurch gekennzeichnet, dass** ein Temperatursensor zur Messung der Temperatur der Materialauflage und/oder des verfestigbaren Material (6) vorgesehen ist, der mit einer Steuereinheit zur Regelung der Heizleistung der zweiten Bestrahlungseinheit derart zusammenwirkt, dass eine vorgegebene Temperatur der Materialauflage oder des verfestigbaren Materials (6) erreicht und/oder gehalten werden kann.

17. Vorrichtung nach einem der Ansprüche 11 bis 16, **dadurch gekennzeichnet, dass** eine mit der ersten Bestrahlungseinheit zusammenwirkende Steuereinheit dazu vorbereitet ist, in aufeinanderfolgenden Bestrahlungsschritten übereinanderliegende Schichten auf der Bauplattform (5) jeweils mit vorgegebener Geometrie durch Steuerung der ersten Bestrahlungseinheit zu verfestigen und nach jedem Bestrahlungsschritt für eine Schicht die Relativposition der Bauplattform (5) zum Wannenboden (2) anzupassen, um so sukzessive den Formkörper (11) in der gewünschten Form aufzubauen.

18. Vorrichtung nach einem der Ansprüche 11 bis 17, **dadurch gekennzeichnet, dass** eine bewegbar geführte Rakel und eine Antriebseinheit zum Hin- und Herbewegen der Rakel unter der Bauplattform (5) hindurch vorgesehen sind, um zwischen zwei Bestrahlungsschritten jeweils eine Schicht vorgegebener Dicke des verfestigbaren Materials (6) auszubilden, oder aber die Wannenauflage selbst beweglich unter einer stationären Rakel- oder Beschichtungseinheit geführt werden kann.

## Claims

1. A method for the lithography-based generative production of three-dimensional shaped bodies (11), in which a material (6) solidifiable by exposure to electromagnetic radiation is present on a material support permeable in at least certain areas, a building platform (5) is positioned at a distance from the material support, material (6) present between the building platform (5) and the material support is heated and, in the heated state, is position-selectively radiated by a first radiation source (4) and solidified, wherein the electromagnetic radiation is introduced into the material (6) from below through the material support permeable in at least certain areas to the radiation of the first radiation source (4), **characterized in that** heating of the material (6) is effected by radiating the material support with electromagnetic radiation of a second radiation source (12), wherein the material support is substantially impermeable to the radiation of the second radiation source (12).

2. A method according to claim 1, **characterized in that** the radiation of the first radiation source (4) comprises a first wavelength range and the radiation of the second radiation source (12) comprises a second wavelength range different from the first wavelength range and, in particular, non-overlapping, the radiation of the first radiation source (4) preferably being in the wavelength range from 200-900nm, in particular 300-400nm or 400-480nm, and the radiation of the second radiation source (12) preferably being in the infrared spectrum, in particular in the wavelength range of 900-15,000nm.

3. A method according claim 1 or 2, **characterized in that** the radiation of the second radiation source (12) is supplied to the material support from the direction of the first radiation.

4. A method according to any one of claims 1 to 3, **characterized in that** the radiation of the second radiation source (12) is directed to the material support region transparent to the radiation of the first radiation.

5. A method according to any one of claims 1 to 4, **characterized in that** the material support, on its side wetted by the material (6), and/or on its side facing away from the material (6), carries a layer at least partially absorbing or reflecting the radiation of the second radiation source (12), or the material support is itself comprised of a material having such an absorption property.

6. A method according to any one of claims 1 to 5, **characterized in that** radiating the material support with the electromagnetic radiation of the second radiation source (12) is performed for heating the material support to a temperature of 40°C-300°C, preferably 40°C-150°C.

7. A method according to any one of claims 1 to 6, **characterized in that** the solidifiable material (6) has a viscosity of at least 15 Pa.s at 20°C room temperature.

8. A method according to any one of claims 1 to 7, **characterized in that** the solidifiable material (6) is heated to a temperature of at least 40°C.

9. A method according to any one of claims 1 to 8, **characterized in that** the temperature of the material support and/or of the solidifiable material (6) is measured, and the radiation performance of the second radiation source (12) is controlled as a function of the temperature measurements.

10. A method according to any one of claims 1 to 9, **characterized in that** the shaped body (11) is constructed in layers, wherein shaped-body layers (10) are consecutively formed one above the other by forming a material layer of predefined thickness each on the material support and lowering a building platform (5), or the shaped body (11) at least partially constructed on the building platform (5), into the material layer such that, between the building platform (5) or the shaped body (11), respectively, and the material support a layer to be solidified of the material is formed, which layer is solidified by radiation to form the desired shape of the shaped-body layer (10) .

11. A device for the lithography-based generative production of three-dimensional shaped bodies (11), in particular for carrying out a method according to any one of claims 1 to 10, comprising a first radiation source (4) of electromagnetic radiation, a material support permeable to the radiation of the first radiation source (4) in at least certain areas for a material (6) solidifiable by exposure to said radiation, a building platform (5) held at an adjustable level above the material support, a first radiation unit comprising the first radiation source (4) and actuatable from below through the material support for the position-selective radiation of the material (6) present between the building platform (5) and the material support, and a heating device for heating the material (6) present between the building platform (5) and the material support, **characterized in that** the heating device comprises a second radiation unit directed to the material support and comprising a second radiation source (12) of electromagnetic radiation, and that the material support is substantially impermeable to the radiation of the second radiation source (12).

12. A device according to claim 11, **characterized in that** the radiation of the first radiation source (4) comprises a first wavelength range and the radiation of the second radiation source (12) comprises a second wavelength range different from the first wavelength range and, in particular, non-overlapping, the radiation of the first radiation source (4) preferably being in the wavelength range from 200-900nm, in particular 300-400nm or 400-480nm, and the radiation of the second radiation source (12) preferably being in the infrared spectrum, in particular in the wavelength range of 900-15,000nm.

13. A device according to claim 11 or 12, **characterized in that** the second radiation unit is arranged such that the radiation of the second radiation source (12) is supplied to the material support from the direction of the first radiation.

14. A device according to any one of claims 11 to 13, **characterized in that** the radiation of the second radiation source (12) is directed to the material support region transparent to the radiation of the first radiation.

15. A device according to any one of claims 11 to 14, **characterized in that** the material support, on its side wetted by the solidifiable material (6), and/or on its side facing away from the solidifiable material (6), carries a layer at least partially absorbing or reflecting the radiation of the second radiation source (12), or the material support is itself comprised of a material having such an absorption property.

16. A device according to any one of claims 11 to 15, **characterized in that** a temperature sensor is provided for measuring the temperature of the material support and/or the solidifiable material (6), which sensor cooperates with a control unit for controlling the heating performance of the second radiation unit such that a predefined temperature of the material support, or of the solidifiable material (6), is attained and/or can be maintained.

17. A device according to any one of claims 11 to 16, **characterized in that** a control unit cooperating with the first radiation unit is prepared to solidify in successive radiation steps superimposed layers on the building platform (5) each with a predefined geometry by control of the first radiation unit, and to adapt for a layer the relative position of the building platform (5) relative to the tub bottom (2) after each radiation step in order to successively build up the shaped article (11) in the desired shape.

18. A device according to any one of claims 11 to 17, **characterized in that** a movably guided doctor blade and a drive unit for reciprocating the doctor blade through below the building platform (5) is provided to form a layer of predefined thickness of the solidifiable material (6) each between two radiation steps, or the tub support is itself movably guided below a stationary doctor blade or coating unit.

## Revendications

1. Procédé de fabrication générative par lithographie de corps de formage tridimensionnels (11), dans lequel un matériau (6) solidifiable sous l'action d'un rayonnement électromagnétique est présent sur un support de matériau perméable au moins par zone, une plateforme de construction (5) est positionnée à distance du support de matériau, un matériau (6) se trouvant entre la plateforme de construction (5) et le support de matériau est chauffé et exposé à l'état chauffé de manière localisée à une première source de rayonnement (4) et est solidifié, dans lequel le rayonnement électromagnétique est introduit dans le matériau (6) par le bas à travers le support de matériau perméable au moins par zone au rayonnement de la première source de rayonnement (4), **caractérisé en ce que** le chauffage du matériau (6) a lieu par exposition du support de matériau (6) au rayonnement électromagnétique d'une deuxième source de rayonnement (12), dans lequel le support de matériau est sensiblement imperméable au rayonnement de la deuxième source de rayonnement (12).

2. Procédé selon la revendication 1, **caractérisé en ce que** le rayonnement de la première source de rayonnement (4) comprend une première plage de longueurs d'onde et le rayonnement de la deuxième source de rayonnement (12) comprend une deuxième plage de longueurs d'onde, différente de la première plage de longueurs d'onde, en particulier non chevauchante, dans lequel le rayonnement de la première source de rayonnement (4) se situe de préférence dans la plage de longueurs d'onde de 200-900 nm, en particulier 300-400 nm ou 400-480 nm, et le rayonnement de la deuxième source de rayonnement (12) se situe de préférence dans le spectre infrarouge, en particulier dans la plage de longueurs d'onde de 900-15 000 nm.

3. Procédé selon l'une quelconque des revendications 1 ou 2, **caractérisé en ce que** le rayonnement de la deuxième source de rayonnement (12) est amené au support de matériau depuis la direction du premier rayonnement.

4. Procédé selon l'une quelconque des revendications 1 à 3, **caractérisé en ce que** le rayonnement de la deuxième source de rayonnement (12) est dirigé sur la zone du support de matériau transparente au rayonnement du premier rayonnement.

5. Procédé selon l'une quelconque des revendications 1 à 4, **caractérisé en ce que** le support de matériau porte sur le côté mouillé par le matériau (6) et/ou sur le côté opposé au matériau (6), une couche absorbant ou réfléchissant au moins en partie le rayonnement de la deuxième source de rayonnement (12), ou alors le support de matériau est constitué lui-même d'un matériau avec une telle propriété d'absorption.

6. Procédé selon l'une quelconque des revendications 1 à 5, **caractérisé en ce que** l'exposition du support de matériau au rayonnement électromagnétique de la deuxième source de rayonnement (12) a lieu pour le chauffage du support de matériau à une température de 40 °C-300 °C, de préférence 40 °C-150 °C.

7. Procédé selon l'une quelconque des revendications 1 à 6, **caractérisé en ce que** le matériau solidifiable (6) présente pour une température ambiante de 20 °C, une viscosité d'au moins 15 Pa·s.

8. Procédé selon l'une quelconque des revendications 1 à 7, **caractérisé en ce que** le matériau solidifiable (6) est chauffé à une température d'au moins 40 °C.

9. Procédé selon l'une quelconque des revendications 1 à 8, **caractérisé en ce que** la température du support de matériau et/ou du matériau solidifiable (6) est mesurée et la puissance de rayonnement de la deuxième source de rayonnement (12) est réglée en fonction des valeurs de mesure de température.

10. Procédé selon l'une quelconque des revendications 1 à 9, **caractérisé en ce que** le corps de formage (11) est construit par couches, dans lequel des couches (10) de corps de formage sont réalisées successivement les unes au-dessus des autres, en réalisant à chaque fois sur le support de matériau une couche de matériau d'épaisseur prédéterminée et en abaissant dans la couche de matériau une plateforme de construction (5) ou le corps de formage (11) construit au moins en partie au niveau de la plateforme de construction (5) de telle sorte qu'est réalisée entre la plateforme de construction (5) respectivement le corps de formage (11) et le support de matériau une couche à solidifier du matériau qui est solidifiée par rayonnement en vue de la réalisation de la forme souhaitée de la couche (10) de corps de formage.

11. Dispositif de fabrication générative par lithographie de corps de formage tridimensionnels (11), en particulier pour la réalisation d'un procédé selon l'une quelconque des revendications 1 à 10, comprenant une première source de rayonnement (4) de rayonnement électromagnétique, un support de matériau perméable au moins par zone au rayonnement de la première source de rayonnement (4) pour un matériau (6) solidifiable sous l'action du rayonnement, une plateforme de construction (5), qui est retenue à une hauteur réglable au-dessus du support de matériau, une première unité d'exposition comprenant la première source de rayonnement (4), qui peut être commandée pour l'exposition localisée de matériau (6) se trouvant entre la plateforme de construction (5) et le support de matériau par le bas à travers le support de matériau, et un dispositif de chauffage pour le chauffage du matériau (6) se trouvant entre la plateforme de construction (5) et le support de matériau, **caractérisé en ce que** le dispositif de chauffage comprend une deuxième unité d'exposition dirigée sur le support de matériau avec une deuxième source de rayonnement (12) de rayonnement électromagnétique et que le support de matériau est sensiblement imperméable au rayonnement de la deuxième source de rayonnement (12).

12. Dispositif selon la revendication 11, **caractérisé en ce que** le rayonnement de la première source de rayonnement (4) comprend une première plage de longueurs d'onde et le rayonnement de la deuxième source de rayonnement (12) comprend une deuxième plage de longueurs d'onde, différente de la première plage de longueurs d'onde, en particulier non chevauchante, dans lequel le rayonnement de la première source de rayonnement (4) se situe de préférence dans la plage de longueurs d'onde de 200-900 nm, en particulier 300-400 nm ou 400-480 nm, et le rayonnement de la deuxième source de rayonnement (12) se situe de préférence dans le spectre infrarouge, en particulier dans la plage de longueurs d'onde de 900-15 000 nm.

13. Dispositif selon la revendication 11 ou 12, **caractérisé en ce que** la deuxième unité d'exposition est agencée de sorte que le rayonnement de la deuxième source de rayonnement (12) est amené au support de matériau depuis la direction du premier rayonnement.

14. Dispositif selon l'une quelconque des revendications 11 à 13, **caractérisé en ce que** le rayonnement de la deuxième source de rayonnement (12) est dirigé sur la zone du support de matériau transparente au rayonnement du premier rayonnement.

15. Dispositif selon l'une quelconque des revendications 11 à 14, **caractérisé en ce que** le support de matériau porte sur le côté mouillé par le matériau solidifiable (6) et/ou sur le côté opposé au matériau solidifiable (6), une couche absorbant ou réfléchissant au moins en partie le rayonnement de la deuxième source de rayonnement (12), ou alors le support de matériau est constitué lui-même d'un matériau avec une telle propriété d'absorption.

16. Dispositif selon l'une quelconque des revendications 11 à 15, **caractérisé en ce qu'**un capteur de température est prévu pour la mesure de la température du support de matériau et/ou du matériau solidifiable (6), qui coopère avec une unité de commande pour le réglage de la puissance de chauffage de la deuxième unité d'exposition de sorte qu'une température prédéfinie du support de matériau ou du matériau solidifiable (6) peut être atteinte et/ou maintenue.

17. Dispositif selon l'une quelconque des revendications 11 à 16, **caractérisé en ce qu'**une unité de commande coopérant avec la première unité d'exposition est préparée pour solidifier dans des étapes d'exposition successives, des couches superposées sur la plateforme de construction (5) respectivement de géométrie prédéfinie par commande de la première unité d'exposition et pour adapter après chaque étape d'exposition pour une couche la position relative de la plateforme de construction (5) par rapport au fond de cuve (2) pour construire ainsi progressivement le corps de formage (11) de forme souhaitée.

18. Dispositif selon l'une quelconque des revendications 11 à 17, **caractérisé en ce qu'**un racloir guidé mobile et une unité d'entraînement pour le mouvement de va-et-vient du racloir sont prévus par dessous la plateforme de construction (5) pour réaliser entre deux étapes d'exposition respectivement une couche d'épaisseur prédéfinie du matériau solidifiable (6), ou alors le support de cuve peut être guidé lui-même mobile sous une unité de raclage ou de revêtement stationnaire.
